# DEMANDE DE BREVET EUROPEEN

(11) **EP 3 078 541 A1**
(43) Date de publication de la demande: **12.10.2016**
(21) Numéro de dépôt: 16164313.5
(22) Date de dépôt: 07.04.2016
(51) Int. Cl.: B60N 2/48, B60N 2/58, B60N 2/70, B29C 44/58

(54) **APPUI-TÊTE DE SIÈGE DE VÉHICULE AUTOMOBILE**

(30) Priorité: 10.04.2015 FR 1553153
(71) Demandeur: Cera TSC, 75008 Paris (FR)
(72) Inventeur: DAUCHEZ, Fernand, 02400 Bezu Saint Germain (FR); BLAY, Bernard, 60280 Bienville (FR); SAVIGNE, Pascal, 56800 Taupont (FR); LEPIMPEC, Yves, 56800 Ploermel (FR)
(74) Mandataire: Sayettat, Julien Christian

(57) **Abrégé**

Appui-tête (1) comprenant : une armature (2); un élément (3) d'absorption d'énergie associé en haut de ladite armature; un bloc (4) de rembourrage surmoulant ledit élément; une coiffe (5) surmoulée par ledit bloc, ladite coiffe comprenant : un premier format (6) inférieure pourvu d'une bouche (8) d'injection d'un mélange précurseur de mousse, ledit format comprenant une première couche d'aspect (9) et une sous-couche (10) de mousse poreuse élastiquement compressible d'épaisseur inférieure à 5 mm; un deuxième format (7) comprenant une deuxième couche d'aspect (11) et dépourvu de sous-couche, ledit appui-tête comprenant en outre au moins un pavé (12) de dégazage, ledit pavé étant : à base de mousse poreuse élastiquement compressible; fixé sur ledit élément en regard et à distance dudit deuxième format.

## Description

L'invention concerne un appui-tête de siège de véhicule automobile et un procédé de réalisation d'un tel appui-tête.

Il est connu de réaliser un appui-tête de siège de véhicule automobile, ledit appuitête comprenant :
- une armature de liaison à un dossier dudit siège,
- un élément d'absorption d'énergie associé en haut de ladite armature,
- un bloc de rembourrage en mousse de polyuréthanne élastiquement compressible surmoulant ledit élément,
- une coiffe de revêtement dudit bloc, ladite coiffe étant surmoulée par ledit bloc, ladite coiffe étant formée d'une pluralité de formats de revêtement associés entre eux,
ladite coiffe comprenant :
- un premier format de revêtement, formant la face inférieure de ladite coiffe, ledit format étant pourvu d'une bouche d'injection d'un mélange précurseur de mousse, ledit format comprenant une première couche d'aspect et une sous-couche de mousse poreuse élastiquement compressible d'épaisseur inférieure à 5 mm, la présence d'une telle sous-couche permettant d'absorber une partie des gaz dégagés lors de l'expansion de la mousse,
- un deuxième format de revêtement comprenant une deuxième couche d'aspect, ledit format étant dépourvu de sous-couche de mousse poreuse élastiquement compressible.

L'élément d'absorption d'énergie est généralement sous forme d'un boitier en matériau plastique moulé.

Il sert à absorber une partie de l'énergie dissipée par la tête d'un passager heurtant l'appui-tête en cas d'accident du véhicule.

Par ailleurs, le fait de ne pas mettre de sous-couche de mousse sur un deuxième format est lié à un souci de production de l'appui-tête à moindre coût.

En particulier, la deuxième couche d'aspect peut être à base de cuir.

Le cuir étant étanche à la mousse, on peut envisager son surmoulage direct par la mousse du bloc.

Cependant, la présence de l'élément d'absorption peut perturber l'écoulement du mélange précurseur de mousse et, de ce fait, donner lieu à la formation de bulles entre la mousse et le deuxième format, ce qui conduit à une mauvaise cohésion entre les deux.

En variante, la deuxième couche d'aspect peut être un textile en envers duquel est collée une sous-couche à base de film étanche à la mousse, le dépôt d'un tel film pouvant s'avérer plus économique que celui d'une sous-couche à base de mousse.

Là encore, se présente un risque de formation de bulles telles qu'évoquées ci-dessus.

L'invention a pour but de pallier cet inconvénient.

A cet effet, et selon un premier aspect, l'invention propose un appui-tête de siège de véhicule automobile, ledit appui-tête comprenant :
- une armature de liaison à un dossier dudit siège,
- un élément d'absorption d'énergie associé en haut de ladite armature,
- un bloc de rembourrage en mousse de polyuréthanne élastiquement compressible surmoulant ledit élément,
- une coiffe de revêtement dudit bloc, ladite coiffe étant surmoulée par ledit bloc, ladite coiffe étant formée d'une pluralité de formats de revêtement associés entre eux,
ladite coiffe comprenant :
- un premier format de revêtement, disposé en face inférieure de ladite coiffe, ledit format étant pourvu d'une bouche d'injection d'un mélange précurseur de mousse, ledit format comprenant une première couche d'aspect et une sous-couche de mousse poreuse élastiquement compressible d'épaisseur inférieure à 5 mm,
- un deuxième format de revêtement comprenant une deuxième couche d'aspect, ledit format étant dépourvu de sous-couche de mousse poreuse élastiquement compressible,
ledit appui-tête comprenant en outre au moins un pavé de dégazage, ledit pavé étant :
- à base de mousse - notamment de polyuréthanne - poreuse élastiquement compressible,
- fixé sur ledit élément en regard et à distance dudit deuxième format, une épaisseur de la mousse dudit bloc s'interposant entre ledit pavé et ledit deuxième format,
- d'épaisseur inférieure à 12 mm, et notamment inférieure à 10 mm,
- surmoulé par ledit bloc.

Dans cette description, les termes de positionnement dans l'espace (haut, inférieur,...) sont pris en référence à l'appui-tête disposé dans le véhicule.

La demanderesse a observé, de façon surprenante, que le fait de mettre un pavé de dégazage, même de dimensions très réduites donc présentant un coût très modique, permet d'éviter la formation de bulles entre le deuxième format de revêtement et la mousse du bloc, ce qui permet d'optimiser la cohésion entre les deux malgré l'absence de sous-couche de mousse dans ledit format.

Selon un deuxième aspect, l'invention propose un procédé de réalisation d'un tel appui-tête.

D'autres particularités et avantages de l'invention apparaîtront dans la description qui suit, faite en référence aux figures jointes, dans lesquelles :

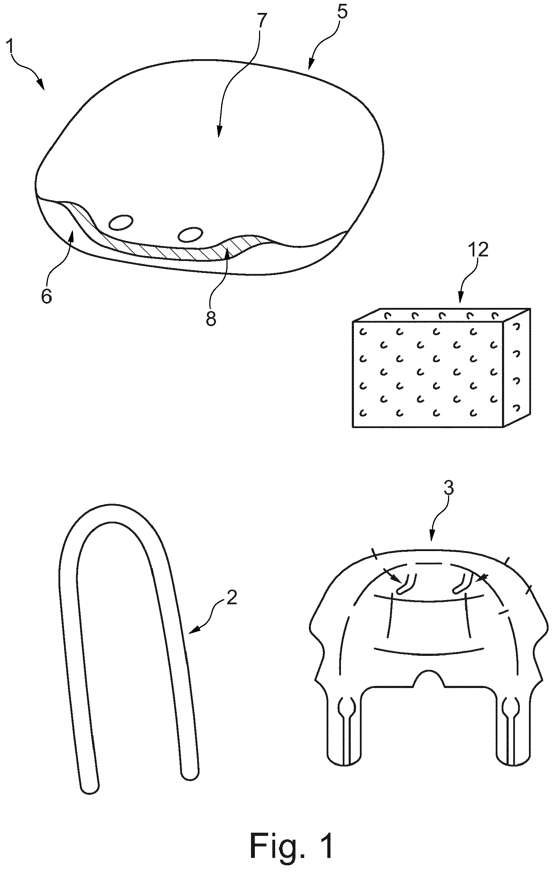

- la figure 1 est une vue schématique en perspective partielle éclatée d'un appui-tête selon une réalisation,

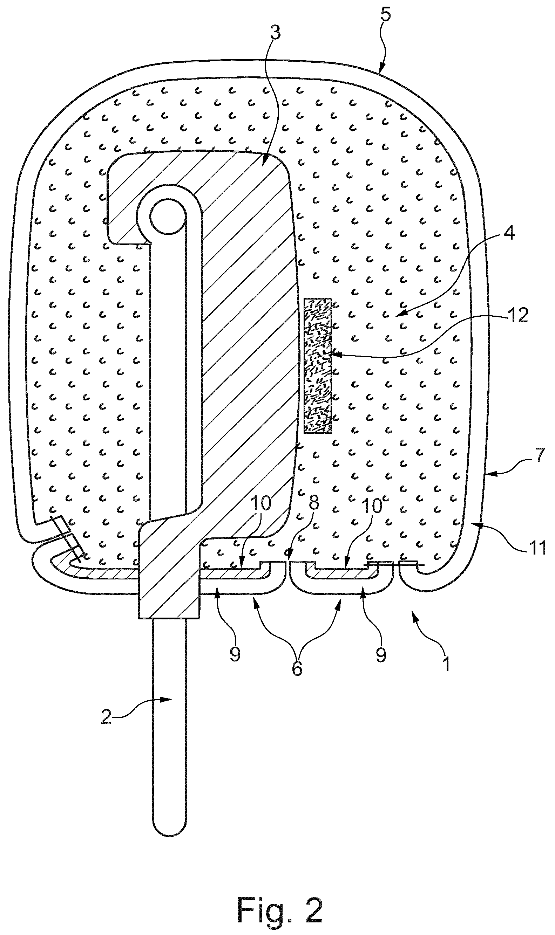

- la figure 2 est une vue schématique en coupe de l'appui-tête de la figure 1.

En référence aux figures, on décrit un appui-tête 1 de siège de véhicule automobile, ledit appui-tête comprenant :
- une armature 2 de liaison à un dossier dudit siège,
- un élément 3 d'absorption d'énergie associé - notamment par emboitement - en haut de ladite armature,
- un bloc 4 de rembourrage en mousse de polyuréthanne élastiquement compressible surmoulant ledit élément,
- une coiffe 5 de revêtement dudit bloc, ladite coiffe étant surmoulée par ledit bloc, ladite coiffe étant formée d'une pluralité de formats 6,7 de revêtement associés entre eux,
ladite coiffe comprenant :
- un premier format 6 de revêtement, disposé en face inférieure de ladite coiffe, ledit format étant pourvu d'une bouche 8 d'injection d'un mélange précurseur de mousse, ledit format comprenant une première couche d'aspect 9 - notamment à base de cuir, tissu ou textile enduit de plastique - et une sous-couche 10 de mousse poreuse élastiquement compressible d'épaisseur inférieure à 5 mm,
- un deuxième format 7 de revêtement comprenant une deuxième couche d'aspect 11 - notamment à base de cuir, tissu ou textile enduit de plastique -, ledit format étant dépourvu de sous-couche de mousse poreuse élastiquement compressible,
ledit appui-tête comprenant en outre au moins un pavé 12 de dégazage, ledit pavé étant :
- à base de mousse - notamment de polyuréthanne - poreuse élastiquement compressible,
- fixé - notamment par collage - sur ledit élément en regard et à distance dudit deuxième format, une épaisseur de la mousse dudit bloc s'interposant entre ledit pavé et ledit deuxième format,
- d'épaisseur inférieure à 12 mm, et notamment inférieure à 10 mm, de manière à ne pas impacter le confort de l'appui-tête,
- surmoulé par ledit bloc.

Selon la réalisation représentée, le pavé 12 vu de face présente une forme de rectangle ou de carré.

Selon une réalisation, le pavé 12 vu de face présente une surface comprise entre 25 et 50 cm².

Selon une réalisation, le pavé 12 est à base de flocons de mousse recyclée agglomérés entre eux par un liant.

Selon une réalisation, le pavé 12 présente une masse volumique comprise entre 40 et 50 kg/m³, et notamment comprise entre 43 et 48 kg/m³.

Selon une réalisation, le matériau du pavé 12 présente, pour un échantillon de surface égale à 20 cm² et d'épaisseur respectivement égale au choix à 5 mm, 15 mm ou 20 mm, une perméabilité à l'air, mesurée selon la norme NF EN ISO 9237 avec une perte de charge de 200 Pa, respectivement supérieure à 1800, 1000 ou 500 l.m⁻².s⁻¹.

Selon une réalisation, le pavé 12 présente une résistance à la compression à 40%, mesurée selon la norme ISO 3386/1, comprise entre 3,5 et 4,5 kPa.

On décrit enfin un procédé de réalisation d'un tel appui-tête 1, ledit procédé comprenant les étapes suivantes :
- prévoir une armature 2 de liaison à un dossier dudit siège,
- associer en haut de ladite armature un élément 3 d'absorption d'énergie sur lequel est fixé au moins un pavé 12 à base de mousse - notamment de polyuréthanne - poreuse élastiquement compressible,
- prévoir une coiffe 5 de revêtement, ladite coiffe étant formée d'une pluralité de formats 6,7 de revêtement associés entre eux, ladite coiffe comprenant d'une part un premier format 6 de revêtement, disposé en face inférieure de ladite coiffe, ledit format étant pourvu d'une bouche 8 d'injection d'un mélange précurseur de mousse, ledit format comprenant une première couche d'aspect 9 et une sous-couche 10 de mousse poreuse élastiquement compressible d'épaisseur inférieure à 5 mm, ladite coiffe comprenant d'autre part un deuxième format 7 de revêtement comprenant une deuxième couche d'aspect 11, ledit format étant dépourvu de sous-couche de mousse poreuse élastiquement compressible,
- disposer ladite coiffe dans un moule,
- disposer le haut de ladite armature pourvue dudit élément et dudit pavé dans ladite coiffe, ledit pavé étant disposé en regard dudit deuxième format,
- injecter par ladite bouche ledit mélange précurseur de mousse dans ladite coiffe de manière à réaliser un bloc 4 de rembourrage en mousse de polyuréthanne élastiquement compressible surmoulant ledit élément, ladite coiffe et ledit pavé,
- démouler l'appui-tête 1 obtenu.

## Revendications

1. Appui-tête (1) de siège de véhicule automobile, ledit appui-tête comprenant :
• une armature (2) de liaison à un dossier dudit siège,
• un élément (3) d'absorption d'énergie associé en haut de ladite armature,
• un bloc (4) de rembourrage en mousse de polyuréthanne élastiquement compressible surmoulant ledit élément,
• une coiffe (5) de revêtement dudit bloc, ladite coiffe étant surmoulée par ledit bloc, ladite coiffe étant formée d'une pluralité de formats (6,7) de revêtement associés entre eux,
ladite coiffe comprenant :
• un premier format (6) de revêtement, disposé en face inférieure de ladite coiffe, ledit format étant pourvu d'une bouche (8) d'injection d'un mélange précurseur de mousse, ledit format comprenant une première couche d'aspect (9) et une sous-couche (10) de mousse poreuse élastiquement compressible d'épaisseur inférieure à 5 mm,
• un deuxième format (7) de revêtement comprenant une deuxième couche d'aspect (11), ledit format étant dépourvu de sous-couche de mousse poreuse élastiquement compressible,
ledit appui-tête étant **caractérisé en ce qu'**il comprend en outre au moins un pavé (12) de dégazage, ledit pavé étant :
• à base de mousse - notamment de polyuréthanne - poreuse élastiquement compressible,
• fixé sur ledit élément en regard et à distance dudit deuxième format, une épaisseur de la mousse dudit bloc s'interposant entre ledit pavé et ledit deuxième format,
• d'épaisseur inférieure à 12 mm, et notamment inférieure à 10 mm,
• surmoulé par ledit bloc.

2. Appui-tête selon la revendication 1, **caractérisé en ce que** le pavé (12) vu de face présente une forme de rectangle ou de carré.

3. Appui-tête selon l'une des revendications 1 ou 2, **caractérisé en ce que** le pavé (12) vu de face présente une surface comprise entre 25 et 50 cm².

4. Appui-tête selon l'une quelconque des revendications 1 à 3, **caractérisé en ce que** le pavé (12) est à base de flocons de mousse recyclée agglomérés entre eux par un liant.

5. Appui-tête selon l'une quelconque des revendications 1 à 4, **caractérisé en ce que** le pavé (12) présente une masse volumique comprise entre 40 et 50 kg/m³, et notamment comprise entre 43 et 48 kg/m³.

6. Appui-tête selon l'une quelconque des revendications 1 à 5, **caractérisé en ce que** le matériau du pavé (12) présente, pour un échantillon de surface égale à 20 cm² et d'épaisseur respectivement égale au choix à 5 mm, 15 mm ou 20 mm, une perméabilité à l'air, mesurée selon la norme NF EN ISO 9237 avec une perte de charge de 200 Pa, respectivement supérieure à 1800, 1000 ou 500 l.m⁻².s⁻¹.

7. Appui-tête selon l'une quelconque des revendications 1 à 6, **caractérisé en ce que** le pavé (12) présente une résistance à la compression à 40%, mesurée selon la norme ISO 3386/1, comprise entre 3,5 et 4,5 kPa.

8. Procédé de réalisation d'un appui-tête (1) selon l'une quelconque des revendications 1 à 7, ledit procédé comprenant les étapes suivantes :
• prévoir une armature (2) de liaison à un dossier dudit siège,
• associer en haut de ladite armature un élément (3) d'absorption d'énergie sur lequel est fixé au moins un pavé (12) à base de mousse - notamment de polyuréthanne - poreuse élastiquement compressible,
• prévoir une coiffe (5) de revêtement, ladite coiffe étant formée d'une pluralité de formats (6,7) de revêtement associés entre eux, ladite coiffe comprenant d'une part un premier format (6) de revêtement, disposé en face inférieure de ladite coiffe, ledit format étant pourvu d'une bouche (8) d'injection d'un mélange précurseur de mousse, ledit format comprenant une première couche d'aspect (9) et une sous-couche (10) de mousse poreuse élastiquement compressible d'épaisseur inférieure à 5 mm, ladite coiffe comprenant d'autre part un deuxième format (7) de revêtement comprenant une deuxième couche d'aspect (11), ledit format étant dépourvu de sous-couche de mousse poreuse élastiquement compressible,
• disposer ladite coiffe dans un moule,
• disposer le haut de ladite armature pourvue dudit élément et dudit pavé dans ladite coiffe, ledit pavé étant disposé en regard dudit deuxième format,
• injecter par ladite bouche ledit mélange précurseur de mousse dans ladite coiffe de manière à réaliser un bloc (4) de rembourrage en mousse de polyuréthanne élastiquement compressible surmoulant ledit élément, ladite coiffe et ledit pavé,
• démouler l'appui-tête (1) obtenu.
